# EUROPEAN PATENT SPECIFICATION

(11) **EP 1 594 299 B1**
(45) Date of publication and mention of the grant of the patent: **10.01.2007**
(21) Application number: 04101902.7
(22) Date of filing: 04.05.2004
(51) Int. Cl.: H04M 3/56

(54) **Conference call dialing**
Einrichten einer Konferenzschaltung
Etablissement d'une conférence téléphonique

(43) Date of publication of application: 09.11.2005
(73) Proprietor: Research In Motion Limited, Waterloo, Ontario N2L 3W8 (CA)
(72) Inventor: Schnurr, Jeffrey R., Waterloo, Ontario N2K 4A3 (CA)
(74) Representative: Rickard, David John

(56) References cited:
- EP-A- 0 917 038
- WO-A-00/05679
- WO-A-01/22680
- WO-A-01/54380
- WO-A-02/25478
- WO-A-98/56159
- WO-A-03/028345
- WO-A-03/055188
- US-A- 5 631 904
- US-A1- 2003 078 981
- ANONYMOUS: "SIEMENS M35i/M35 USER GUIDE Passage" SIEMENS M35I/M35 USER GUIDE, XX, XX, June 2000 (2000-06), page 11,19,40,46,68, XP002194458

## Description

The present invention relates to character recognition and, more particularly, to initiating a telephone call that requires information in addition to a telephone number, based on recognition of the telephone number and the additional information.

With the increasing amalgamation of functions on single electronic communication devices, users may now use a single device that combines a telephone application, a calendar application, a World Wide Web browsing application and an application for composing and reading e-mail. As will be apparent to a person skilled in the art, the single electronic tool may exist in a range of devices that includes desktop computers, mobile telephones and wireless personal digital assistants (PDAs).

Along with person to person calls, the telephone application of the electronic communication device may be required to call in to conference calls. Participation in such conference calls has been simplified of late through the use of conference bridge systems. To join a conference call handled by a conference bridge system, participants call a central telephone number unique to the conference bridge system and, once connected to the conference bridge system, participants enter a passcode, which is a unique key that allows the participants to join a particular conference call.

Information about a given conference call, i.e., the telephone number of the conference bridge system and the passcode of the given conference call, which collectively may be called conference call datum, may be received, by a potential participant in the given conference call, in an e-mail. Additionally, conference call datum may be posted on a website or may have been added to the calendar application maintained by the potential participant. Unfortunately, where the conference call datum is not available separately from the device (e.g., on a piece of paper), to enter the conference call datum into the telephone application, the potential participant is required to repeatedly switch between the application in which the conference call datum appears (e-mail reading application, web browsing application, calendar application) and the telephone application.

By recognizing character strings that form a telephone number and additional information, such as conference call datum, an electronic communication device may initiate use of a telephone application to place a call based on a string of characters recognized as the telephone number and a string of characters recognized as the additional information. The recognized character strings may be recognized in a collection of characters in any of the applications executed by the electronic communication device to display text.

In accordance with an aspect of the present invention there is provided a method of initiating a telephone call on a communication device. The method includes recognizing as a telephone number a first string of characters by parsing a collection of characters in an application executed by the device and displayed on a display of said communication device; recognizing as additional information related to said telephone number a second string of characters by parsing said collection of characters displayed on said display; causing a menu to be displayed on the display, where the menu includes a menu item including the first string of characters and the second string of characters and, responsive to determining that the user has selected the menu item, providing the first string of characters and the second string of characters to a telephone application of the communication device. In other aspects of the invention, a communication device is provided that is adapted to perform this method and a computer readable medium is provided to adapt a processor in a communication device to perform the method.

In accordance with another aspect of the present invention there is provided a communication device including a display and a processor. The processor is adapted to execute a first application to recognize as a telephone number a first string of characters by parsing a collection of characters in an application executed by the device and displayed on said display; recognize as additional information related to said telephone number a second string of characters by parsing said collection of characters displayed on said display; cause a menu to be displayed on the display, where the menu includes a menu item including the first string of characters and the second string of characters and provide the first string of characters and the second string of characters to a telephone application of the communication device, responsive to determining that the user has selected the menu item.

WO9856159 discloses using a parsing algorithm applied to webpages or html code which recognises phone numbers and "iconifies" them. In other word the phone numbers within the webpage are highlighted as icons which can be clicked by a user to initiated a call to the recognised number. Related information such as addresses or names associated with the phone number can also be recognised and stored with the phone number in an address book.

EP0917038 allows a user to point to a location in a message in order to centre a search for a telephone number about that location. The found telephone number can then be used as a command for another application, such as a dialler.

WO0005679 discloses a computer system which can scan a TV image in order to identify certain information comprising telephone numbers. The recovered number can be sent to a memory and/or sent to a dialler in order to initiate a call. The system has application in TV advertising, where viewers may wish to contact the supplier of the advertisement they have just seen.

US2003/078981 discloses a mechanism for populating a contacts database in a PDA, smart-phone or similar device with limited data entry facilities, and which filters information from emails in order to add the information into the appropriate fields of the contacts list.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures which illustrate example embodiments of this invention:

FIG. 1 illustrates steps in a method of operation of a recognizer element of a user interface of a communication device;

FIG. 2 illustrates steps in a method of operation of an action element of a user interface of a communication device;

FIG. 3 illustrates a simplified communication device with a display displaying an e-mail message;

FIG. 4 illustrates the simplified communication device of **FIG.** 3, where conference datum within the e-mail message has been recognized;

FIG. 5. illustrates the simplified communication device of FIG. 3, where a focus has been placed on a first string of characters among the conference datum;

FIG. 6. illustrates the simplified communication device of FIG. 3, where selection of the first string of characters has resulted in the presentation of a menu; and

FIG. 7 illustrates a desktop computing system and a mobile communication device, both of which may carry out methods exemplary of embodiments of the present invention.

### DESCRIPTION OF PREFERRED EMBODIMENTS

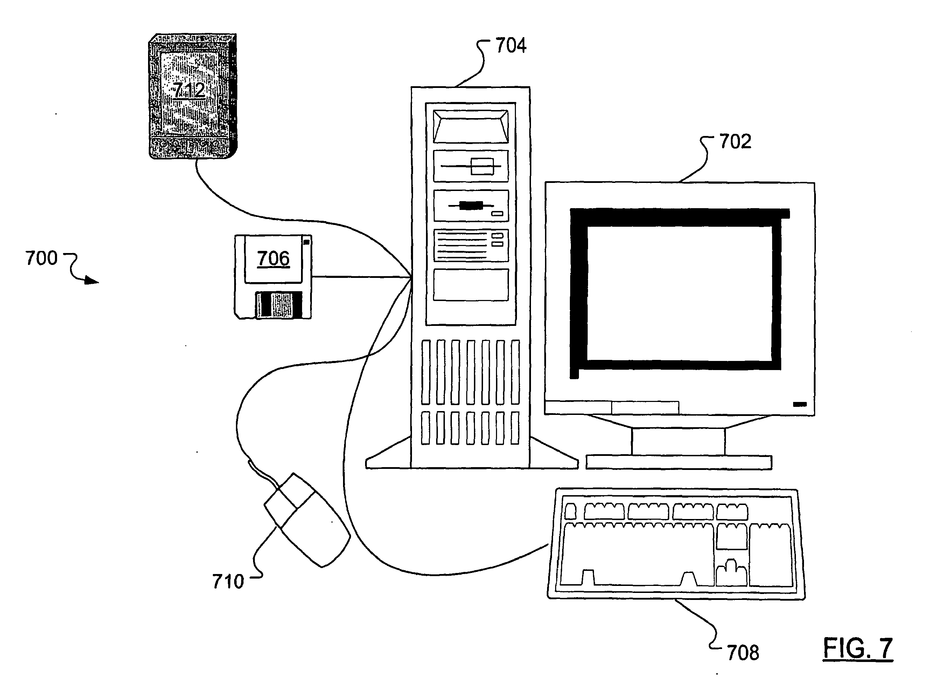

A desktop computing system 700, which may, at least in part, be considered a communication device for performing methods exemplary of the present invention, is illustrated in FIG. 7. The desktop computing system 700 includes a display monitor 702 and a central processing unit 704. The central processing unit 704 may include hardware to communicate with other computers (over local and/or wide area networks), long term and short term memory and a processor. As is typical, connected to the central processing unit 704 may be multiple input peripherals such as a keyboard 708 and a mouse 710. The desktop computing system 700 may be loaded with a computer readable instruction for executing methods exemplary of this invention from a software medium 706 which could be a disk, a tape, a chip or a random access memory containing a file downloaded from a remote source.

Also connected to the desktop computing system 700 is a mobile communication device 712. The mobile communication device 712 may also, at least in part, be considered a communication device for performing methods exemplary of the present invention. The manner in which the mobile communication device 712 connects to the desktop computing system 700 may be wired, e.g., Universal Serial Bus (USB), Firewire (IEEE 1394), serial cable, or wireless, e.g., Infrared, BlueTooth^{™}, and IEEE 802.11. Through connection with the desktop computing system 700 or other source, the mobile communication device 712 may be loaded with computer readable instructions for executing methods exemplary of this invention from the software medium 706.

As will be clear to a person skilled in the art, the mobile communication device 712 may take the form of a standalone wireless communication device. That is, a wireless device that can browse the World Wide Web without the help of a desktop computer. Wireless devices exemplary of such a system communicate with the Internet via mobile wireless networks using protocols such as Code Division Multiple Access (CDMA), General Packet Radio Service (GPRS), Integrated Digital Enhanced Network (IDEN), Mobitex and DataTAC. Further exemplary wireless devices may use the IEEE 802.11 protocol or the wireless communication protocol known as the Universal Mobile Telecommunications System (UMTS).

Conference call datum may be provided as illustrated in the following example: To join the call, dial +1-519-888-1920 or +1-866-839-8025 and enter access code 0198833.

In overview, a primary user interface (UI) element, which is responsible for the display and navigation of textual content, recognizes a first string of characters as a telephone number and considers the telephone number to have the potential to be a telephone number for a conference bridge. Based on the recognition, the first string of characters is emphasized such that the attention of the user is called to the first string of characters. Furthermore, the primary UI element scans characters surrounding the first string of characters to attempt to recognize one or more second strings of characters as possible passcodes. Upon recognizing a second string of characters as a possible passcode, the second string of characters is emphasized in a manner similar to the emphasis of the first string of characters.

Responsive to the user performing some act to acknowledge the emphasized first or second string of characters, say, by pointing at the first string of characters with a mouse pointer and clicking the mouse in a conventional manner, a secondary UI element may present a menu wherein the possible passcodes (the secondary strings of characters) are presented, associated with the first string of characters. Menu items in the menu may include the first string of characters with one of the possible passcodes appended thereto. The user may make a selection of a particular one of the menu items to use to call in to a conference call. The telephone application may then be initiated and passed the first string of characters to use in initiating a call. Once connected, and after a pause, the selected secondary string of characters may be passed to the receiving conference bridge system by the telephone application, based on instructions from the secondary UI element.

As will be clear to a person skilled in the art, the recognition of characters as relating to specific types of text and then offering related functions and commands is known and implementations vary dependent upon the function, the application and the operating system, among other factors. One implementation, included in Microsoft® Word 2002 and Excel 2002, is called a "smart tag". A smart tag has two basic parts, a recognizer element and an action element. Both the recognizer element and the action element are Component Object Model Dynamic Link Libraries (COM DLLs).

A recognizer element is a piece of code that checks documents to identify certain types of text that have been determined to be candidates for smart tags. The text can be recognized as a type (for example, names, addresses, telephone numbers, or URLs) or by specific content (inventory item names, employee names, or branch office names). An action element is a piece of code that provides one or more commands that can be executed.

An overview of smart tags may be found at www.microsoft.com/office/previous/xp/columns/itcolumn08.asp and a software development kit for use in creating smart tags is available at www.microsoft.com/downloads/details.aspx?FamilyId=C6189658-D915-4140-908A-9A0114953721&displaylang=en.

In operation, each application for which text is presented to the user may be considered eligible for the recognition of potential conference call datum. Essentially, in any case where a telephone number and passcode could reasonably be present in text, a recognizer element, to discover and emphasize that telephone number and passcode, may be invoked. Further activity on the part of the user may be handled by invoking the action element, which may, responsive to the further activity, present the user with a menu of options. The selection of the conference call datum from the menu may then trigger the action element to provide a telephone application with the telephone number, wait a predetermined period and then provide the telephone application with the passcode.

Example applications in which embodiments of the invention may be employed include e-mail reading applications, short message service text message reading applications, calendar applications, memo pad applications, web browsing applications and word processing and spreadsheet applications for viewing attachments to e-mail messages.

The recognizer element may identify, by parsing text displayed by the primary UI, a first string of characters in a document to be a potential telephone number of a conference bridge system, where the first string of characters follows the pattern of a telephone number, i.e., for North America, 10 or 11 sequential digits separated by delimiters. The recognizer element may then emphasize the first string of characters such that the attention of the user is called to the potential telephone number.

As will be appreciated by those skilled in the art, a delimiter may include brackets, dashes and spaces and many patterns may be recognized as a telephone number dependent upon country standards. Furthermore, an internal extension may also be recognized as having a pattern of a telephone number, for example, a string of three digits starting with a "3".

Additionally, the recognizer element may identify a second string of characters to be a potential passcode, where the second string of characters follows the pattern of a passcode, e.g., a string of two to eight consecutive digits, possibly terminated by an octothorpe (#). The recognizer element may then emphasize the second string of characters such that the attention of the user is called to the potential passcode.

In one embodiment, underlining the potential conference call datum in a display emphasizes the potential conference call datum. Other ways of emphasizing the potential conference call datum include highlighting the datum, i.e., altering the color of the background of the datum. Additionally, the datum may be caused to blink on and off or the text size, style or font may be changed.

Responsive to scrolling through the document by the user, the emphasized text may be further emphasized, for example, rendered in bold type, in the sequence in which the emphasized text occurs in the document. For instance, as a user scrolls to the potential telephone number, the underlined telephone number may be rendered in bold type. Subsequently, responsive to further scrolling, the underlined passcode may be rendered in bold type. Alternatively, the underlined text may be rendered in bold type in response to a "mouse-over" event, as is well understood in the UI art.

While a string of potential conference call datum is rendered in bold type, i.e., while the UI recognizes that the attention of the user is focused on the potential telephone number or the potential passcode, further activity by the user may trigger the action element to produce a menu of options.

Conventionally, the menu of options is limited to placing a regular call to the potential telephone number, sending a Short Message Service (SMS) message to the potential telephone number and/or adding the potential telephone number to a contact management application. One of the menu options may then be selected through further activity by the user, such as clicking a mouse button while the menu option representative of the preferred option is emphasized, or, equally, depressing a joystick on a mobile telephone or placing inward pressure on a side-mounted thumbwheel on a mobile communication device. Where the further activity, e.g., the clicking, is dependent upon the design of the physical input device.

In accordance with embodiments of the present invention, one option (menu item) may relate to placing a call to the potential telephone number and, after a suitable pause, transmitting the potential passcode.

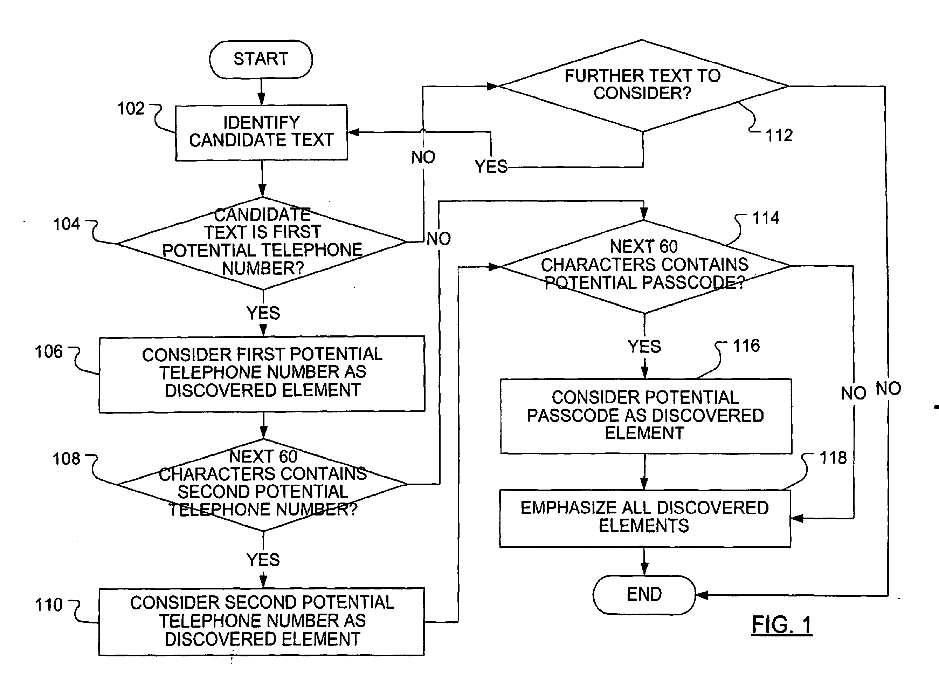

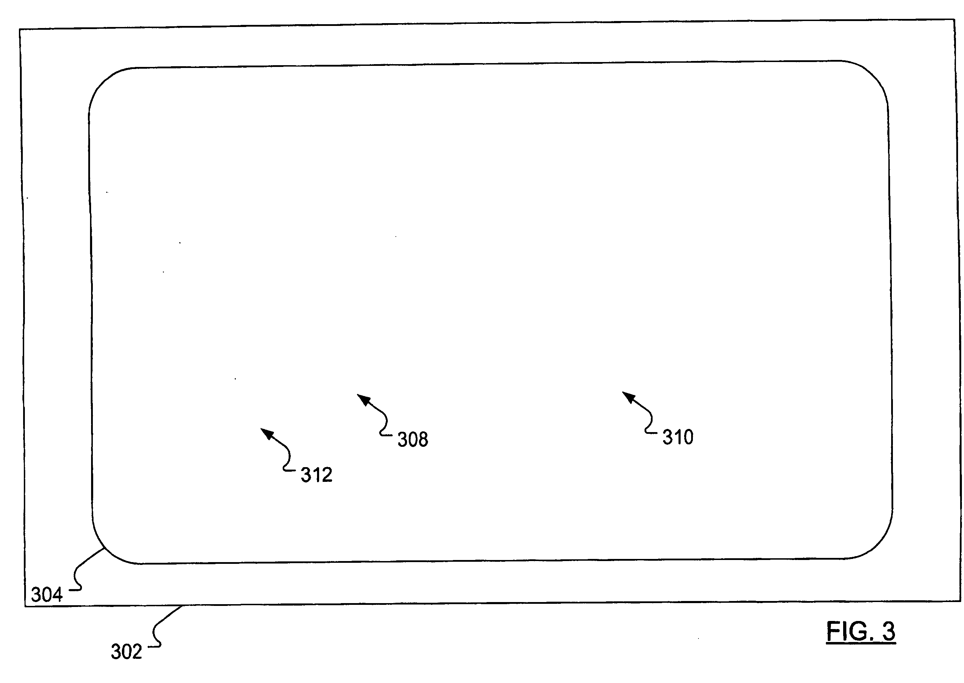

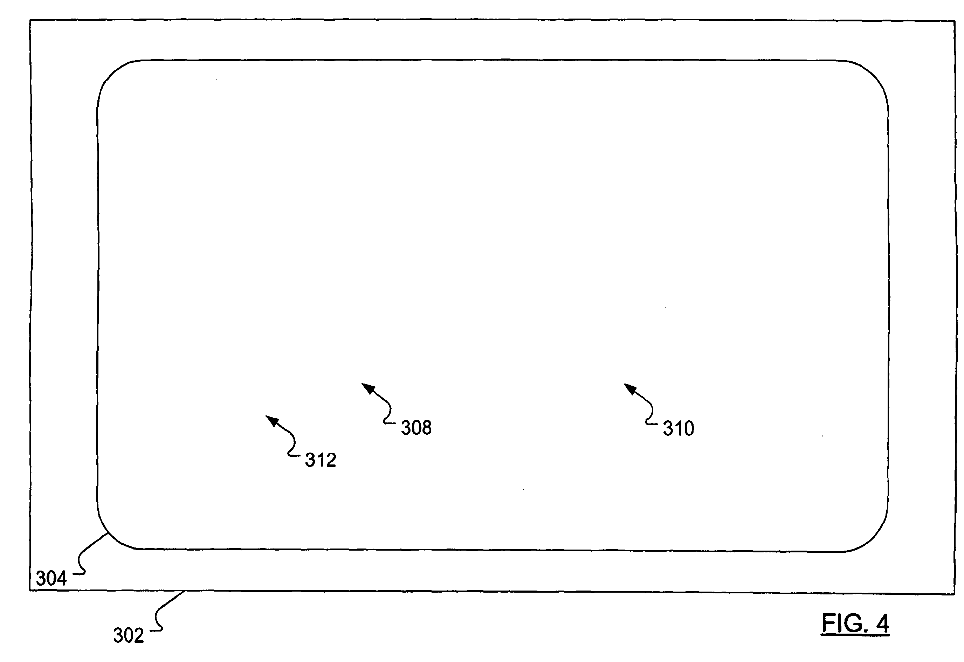

Exemplary steps in a method of operation of the recognizer element, which are outlined in FIG. 1, may be considered in conjunction with FIGS. 3 and 4. FIG. 3 presents a simplified illustration of a communication device 302 having a display 304. Aspects of the present invention may be implemented on a wide range of communication devices that includes desktop computers, mobile telephones and wireless personal digital assistants (PDAs). The display 304 of the communication device 302 in FIG. 3 is illustrated to be displaying an e-mail message inviting the recipient to join a teleconference. The e-mail includes a reference to a first telephone number 308, a second telephone number 310 and an access code 312.

Initially, a first string of candidate text, say, the first telephone number 308 in the e-mail shown on the display 304, is identified (step 102). It is then determined whether the first string of candidate text conforms to the pattern of a telephone number (step 104). If the first string of candidate text conforms to the pattern of a telephone number, the first string of candidate text is then considered to be a discovered element (step 106). If the first string of candidate text does not conform to the pattern of a telephone number, it is determined whether there is further text to consider (step 112). If there is further text to consider, the further text is identified as a string of candidate text (step 102) and may be considered a discovered element. If there is no further text to consider, the method is complete.

Once a string of candidate text is considered to be a discovered element (step 106), it is then determined whether the next 60 characters contain a further string of candidate text, say, the second telephone number 310 in the e-mail shown on the display 304, and whether the further string of candidate text conforms to the pattern of a telephone number (step 108). If the further string of candidate text conforms to the pattern of a telephone number, then the further string of candidate text is considered to be a discovered element (step 110).

Subsequently, and if the further string of candidate text does not conform to the pattern of a telephone number, it is determined whether the next 60 characters contain a potential passcode string (step 114), say, the access code 312 in the e-mail shown on the display 304. If the next 60 characters are determined to contain a potential passcode string, then the potential passcode string is considered to be a discovered element (step 116). Once all of the text has been considered, all of the discovered elements are emphasized (step 118). FIG. 4 illustrates the display 304 on the communication device 302 updated to reflect the emphasis of the displayed e-mail message. In this case, the chosen emphasis method is an underline and each of the first telephone number 308, the second telephone number 310 and the access code 312 are underlined in FIG. 4.

As will be understood by those skilled in the art, the number, 60, of subsequent characters in which presence or absence of a further string of candidate text (step 108), or a potential passcode string (step 114), is determined is presented as an example and may be replaced by some other pre-determined set number of characters. The other pre-determined set number of characters may take a value selected from the range from 10 to 100, with a preferred range from 40 to 80. Of course, the range may differ depending on the expected length of a telephone number in the region of the world in which aspects of the invention are implemented.

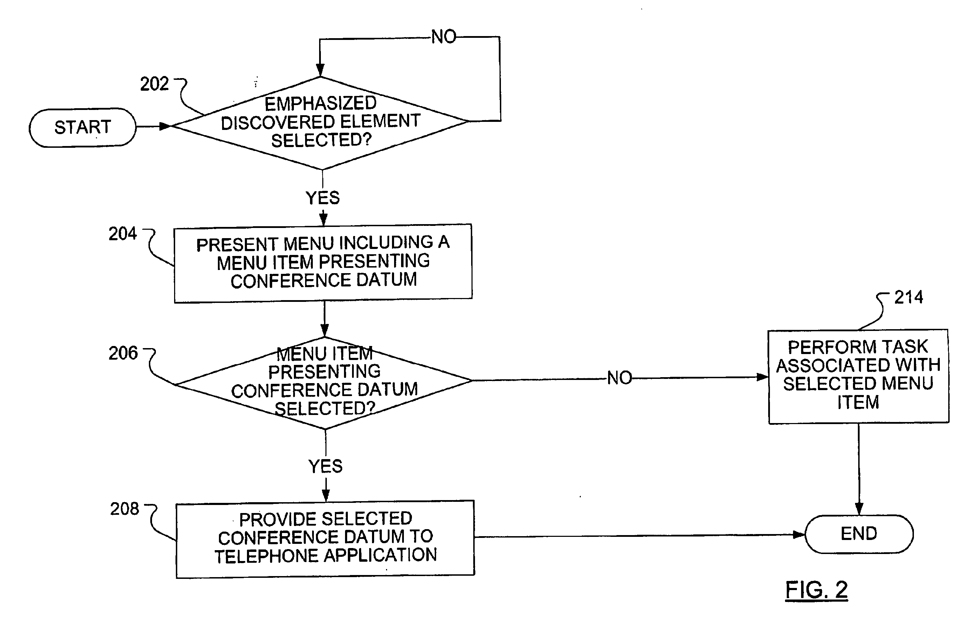

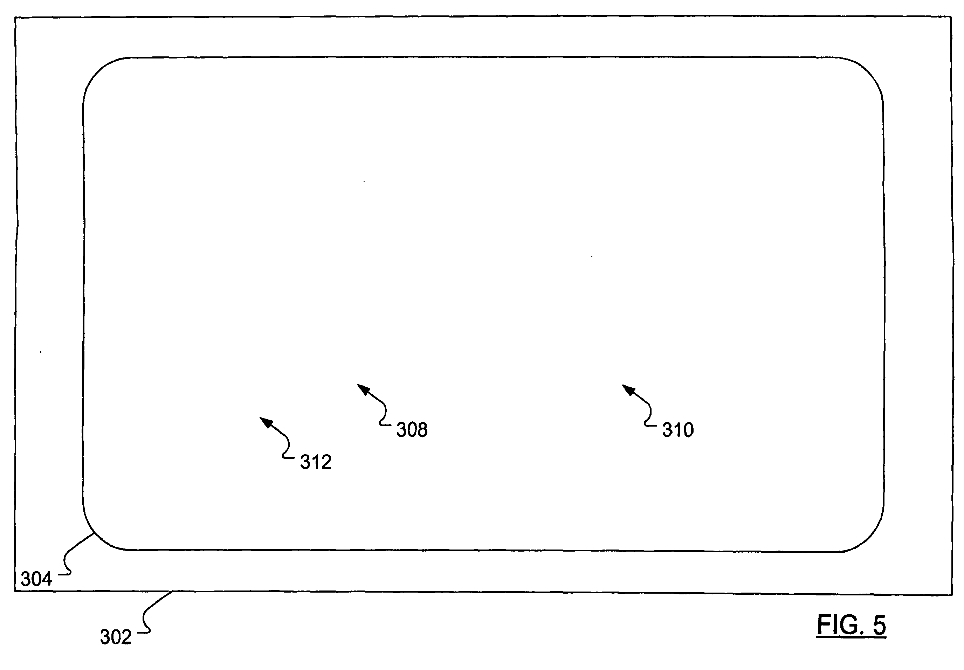

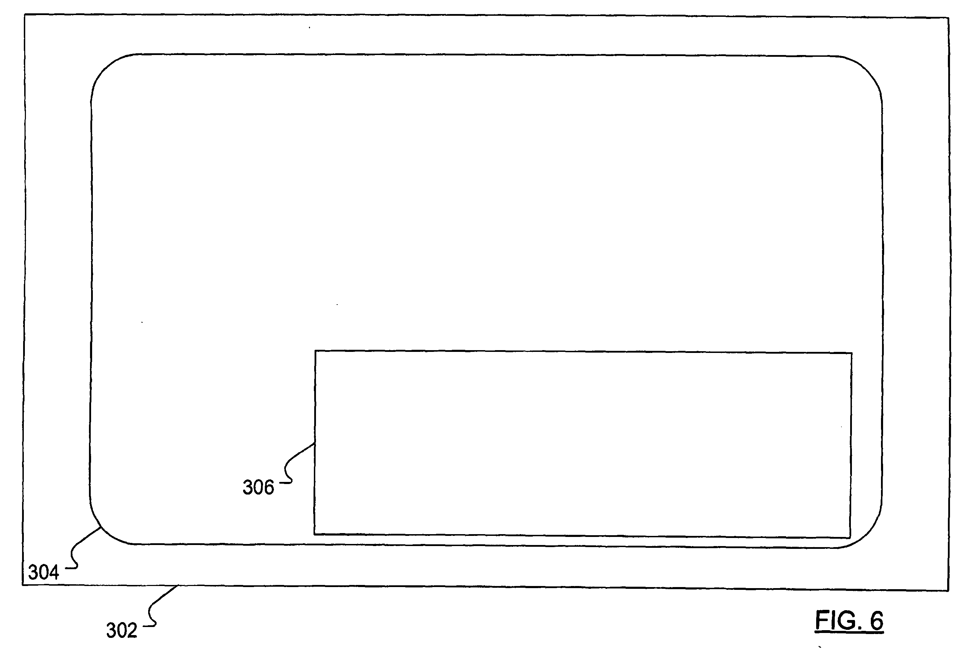

Exemplary steps in a method of operation of the action element, which are outlined in FIG. 2, may be considered in conjunction with FIGS. 5 and 6, which continue to use the simplified illustration of the communication device 302 and the display 304 of FIG. 3.

Initially, it is determined whether one of the discovered elements (i.e., the first telephone number 308, the second telephone number 310 or the access code 312) has been selected (step 202). Selecting a discovered element may, for instance, require two activities on the part of the user.

In the first step, the user uses the user interface to focus on a particular discovered element. As discussed hereinbefore, such indicating may include scrolling the display until the appearance of particular discovered element is altered by the UI. FIG. 5 illustrates a case wherein a user has focused on the first telephone number 308 and, consequently, the first telephone number 308 has been further emphasized by rendering in bold type.

In the second step, the user uses the user interface to indicate that further acts are to be performed. As discussed hereinbefore, such further activity may include clicking a button on a mouse, depressing a joystick on a mobile telephone or placing inward pressure on a side-mounted thumbwheel on a mobile communication device.

Responsive to determining that a particular discovered element has been selected, the action element may present a menu (step 204) to the user. FIG. 6 illustrates a case wherein a user has selected the first telephone number 308 and, consequently, a menu 306 has be presented. The presentation of a menu is known. However, according to aspects of the present invention, the menu 306 in FIG. 6 includes additional menu items specifically related to joining conference calls. The additional menu items are derived from the discovered elements (i.e., the conference datum). In particular, each additional menu item includes a potential telephone number paired with a potential passcode.

The user may review the menu 306 and use the user interface to select a particular menu item. If it is determined (step 206) that the particular menu item selected by the user includes conference datum; the action element may provide the selected conference datum to the telephone application (step 208). In providing the selected conference datum to the telephone application, the action element may separate the telephone number and the passcode by one or more "pause" characters indicating to the telephone application to transmit the passcode a timed delay after transmitting the telephone number. Such a timed delay may accommodate a delay in connecting the communication device to the conference bridge. After providing the conference datum to the telephone application, the activities of the action element may be considered to be complete.

Alternatively, the action element may provide the telephone number portion of the conference datum to the telephone application. After waiting a predetermined waiting period that allows the telephone application to connect to the conference bridge, the action element may provide the passcode portion of the conference datum to the telephone application.

If it is determined (step 206) that the particular menu item selected by the user does not include conference datum; a task associated with the menu item is performed (step 214). However, the performance of such other tasks is beyond the scope of this application.

As will be apparent to a person of ordinary skill in the art, the combination of a telephone number and additional digits may not necessarily relate to a conference bridge and passcode. Instead, the telephone number may be for a switchboard and the additional digits may represent a telephone extension. Additionally, instead, the telephone number may be for an automated interactive voice response (IVR) system and the additional digits may represent menu selections.

Other modifications will be apparent to those skilled in the art and, therefore, the invention is defined in the claims.

## Claims

1. A method of initiating a telephone call on a communication device, said method being **characterized in that** it comprises:
recognizing as a telephone number a first string of characters by parsing a collection of characters in an application executed by the device and displayed on a display of said communication device;
recognizing as additional information related to said telephone number a second string of characters by parsing said collection of characters displayed on said display;
causing a menu to be displayed on said display, where said menu comprises a menu item, said menu item comprising said first string of characters and said second string of characters; and
responsive to determining that said user has selected said menu item, providing said first string of characters and said second string of characters to a telephone calling application of said communication device.

2. The method as claimed in claim 1 **characterized in that** said providing comprises separating said first string of characters and said second string of characters by a specific character indicating to said telephone application to transmit said second string of characters a timed delay after transmitting said first string of characters.

3. The method as claimed in claim 1 **characterized in that** said providing comprises providing said second string of characters a timed delay after providing said first string of characters.

4. The method as claimed in any one of claims 1 to 3 **characterized in that** said method further comprises, responsive to said recognizing said first string of characters, altering said display to emphasize said first string of characters.

5. The method as claimed in any one of claims 1 to 3 **characterized in that** said method further comprises, responsive to said recognizing said second string of characters, altering said display to emphasize said second string of characters.

6. The method as claimed in claim 5 **characterized in that** said altering comprises underlining said second string of characters.

7. The method as claimed in claim 5 or claim 6 **characterized in that** said method further comprises:
determining that a user has focused attention on said second string of characters; and
further altering said display to further emphasize said second string of characters.

8. The method as claimed in claim 7 **characterized in that** said further altering comprises rendering said second string of characters in bold type.

9. The method as claimed in any one of claims 1 to 8 **characterized in that** said telephone number is a first telephone number and said method further comprises recognizing a second string of characters to be displayed on said display as a second telephone number.

10. The method as claimed in any one of claims 1 to 8 **characterized in that** said telephone number is associated with a conference bridge and said additional information is a passcode associated with a particular conference call.

11. The method as claimed in any one of claims 1 to 10 **characterized in that** said recognizing said second string of characters as said additional information comprises considering a fixed number of characters preceding and succeeding said first string of characters.

12. A computer readable medium containing computer-executable instructions **characterized in that** said instructions, when performed by a processor in a communication device, cause said processor to perform a method according to any one of claims 1 to 11.

13. A communication device **characterized in that** it comprises:
a display (702);
a processor (704) adapted to execute a first application to:
recognize as a telephone number a first string of characters by parsing a collection of characters in an application executed by the device and displayed on said display;
recognize as additional information related to said telephone number a second string of characters by parsing said collection of characters displayed on said display;
cause a menu to be displayed on said display, where said menu comprises a menu item, said menu item comprising said first string of characters and said second string of characters; and
provide said first string of characters and said second string of characters to a telephone calling application of said communication device, responsive to determining that said user has selected said menu item.

14. The device as claimed in claim 13 **characterized in that** said first string of characters and said second string of characters are separated by a specific character indicating to said telephone application to transmit said second string of characters a timed delay after transmitting said first string of characters.

15. The device as claimed in claim 13 **characterized in that** said second string of characters is provided a timed delay after providing said first string of characters.

16. The device as claimed in any of claims 13 to 15, the processor being further adapted, responsive to said recognizing said first string of characters, to alter said display to emphasize said first string of characters.

17. The device as claimed in claim 13 to 15, the processor being further adapted, responsive to said recognizing said second string of characters, to alter said display to emphasize said second string of characters.

18. The device as claimed in claim 17 **characterized in that** said altering comprises underlining said second string of characters.

19. The device as claimed in claim 17 or claim 18, the processor further adapted to:
determine that a user has focused attention on said second string of characters; and
further alter said display to further emphasize said second string of characters.

20. The device as claimed in claim 19 **characterized in that** said further altering comprises rendering said second string of characters in bold type.

21. The device as claimed in any of claims 13 to 20 **characterized in that** said telephone number is a first telephone number and said processor is further adapted to recognize a second string of characters to be displayed on said display as a second telephone number.

22. The device as claimed in any of claims 13 to 21 **characterized in that** said telephone number is associated with a conference bridge and said additional information is a passcode associated with a particular conference call.

23. The device as claimed in any of claims 13 to 22 **characterized in that** for recognizing said second string of characters as said additional information said processor is adapted to consider a fixed number of characters preceding and succeeding said first string of characters.

## Patentansprüche

1. Verfahren zum Initiieren eines Telefonanrufs an einer Kommunikationsvorrichtung, das Verfahren **dadurch gekennzeichnet, dass** es umfasst:
Erkennen als eine Telefonnummer einer ersten Folge von Zeichen durch Zerlegung einer Ansammlung von Zeichen in einer Anwendung, die von der Vorrichtung ausgeführt und auf einer Anzeige der Kommunikationsvorrichtung angezeigt wird;
Erkennen als zusätzliche Informationen, die mit der Telefonnummer in Zusammenhang stehen, einer zweiten Folge von Zeichen durch Zerlegung der Ansammlung von Zeichen, die auf der Anzeige angezeigt wird;
Bewirken der Anzeige eines Menüs auf der Anzeige, wobei das Menü ein Menüelement umfasst, wobei das Menüelement die erste Folge von Zeichen und die zweite Folge von Zeichen umfasst; und
als Reaktion auf die Bestimmung, dass der Benutzer das Menüelement ausgewählt hat, Bereitstellen der ersten Folge von Zeichen und der zweiten Folge von Zeichen für eine Telefonanrufanwendung der Kommunikationsvorrichtung.

2. Verfahren nach Anspruch 1, **dadurch gekennzeichnet, dass** die Bereitstellung Trennen der ersten Folge von Zeichen und der zweiten Folge von Zeichen an einem spezifischen Zeichen umfasst, das der Telefonanwendung anzeigt, die zweite Folge von Zeichen eine zeitlich festgelegte Wartezeit nach der Übertragung der ersten Folge von Zeichen zu übertragen.

3. Verfahren nach Anspruch 1, **dadurch gekennzeichnet, dass** die Bereitstellung Bereitstellen der zweiten Folge von Zeichen eine zeitlich festgelegte Wartezeit nach Bereitstellen der ersten Folge von Zeichen umfasst.

4. Verfahren nach einem der Ansprüche 1 bis 3, **dadurch gekennzeichnet, dass** das Verfahren als Reaktion auf die Erkennung der ersten Folge von Zeichen weiter Ändern der Anzeige zur Herausstellung der ersten Folge von Zeichen umfasst.

5. Verfahren nach einem der Ansprüche 1 bis 3, **dadurch gekennzeichnet, dass** das Verfahren als Reaktion auf die Erkennung der zweiten Folge von Zeichen weiter Ändern der Anzeige zur Herausstellung der zweiten Folge von Zeichen umfasst.

6. Verfahren nach Anspruch 5, **dadurch gekennzeichnet, dass** die Änderung Unterstreichen der zweiten Folge von Zeichen umfasst.

7. Verfahren nach Anspruch 5 oder Anspruch 6, **dadurch gekennzeichnet, dass** das Verfahren weiter umfasst:
Feststellen, dass ein Benutzer Aufmerksamkeit auf die zweite Folge von Zeichen gerichtet hat; und
weiter Ändern der Anzeige, um die zweite Folge von Zeichen weiter herauszustellen.

8. Verfahren nach Anspruch 7, **dadurch gekennzeichnet, dass** die weitere Änderung Gestalten der zweiten Folge von Zeichen in fetter Schrift umfasst.

9. Verfahren nach einem der Ansprüche 1 bis 8, **dadurch gekennzeichnet, dass** die Telefonnummer eine erste Telefonnummer ist und das Verfahren weiter Erkennen einer zweiten Folge von Zeichen umfasst, die auf der Anzeige als eine zweite Telefonnummer anzuzeigen ist.

10. Verfahren nach einem der Ansprüche 1 bis 8, **dadurch gekennzeichnet, dass** die Telefonnummer mit einer Konferenzbrücke assoziiert ist und die zusätzliche Information ein Passcode ist, der mit einer bestimmten Konferenzverbindung assoziiert ist.

11. Verfahren nach einem der Ansprüche 1 bis 10, **dadurch gekennzeichnet, dass** das Erkennen der zweiten Folge von Zeichen als die zusätzliche Information Berücksichtigung einer festen Zahl von Zeichen, die der ersten Folge von Zeichen vorangehen und nachfolgen, umfasst.

12. Computerlesbares Medium, das Computer-ausführbare Befehle enthält, **dadurch gekennzeichnet, dass** die Befehle, wenn sie von einem Prozessor in einer Kommunikationsvorrichtung ausgeführt werden, bewirken, dass der Prozessor ein Verfahren nach einem der Ansprüche 1 bis 11 ausführt.

13. Kommunikationsvorrichtung, **dadurch gekennzeichnet, dass** es umfasst:
eine Anzeige (702);
einen Prozessor (704), angepasst zum Ausführen einer ersten Anwendung zum:
Erkennen als eine Telefonnummer einer ersten Folge von Zeichen durch Zerlegung einer Ansammlung von Zeichen in einer
Anwendung, die von der Vorrichtung ausgeführt und auf der Anzeige angezeigt wird;
Erkennen als zusätzliche Information, die mit der Telefonnummer in Zusammenhang steht, einer zweiten Folge von Zeichen durch Zerlegung der Ansammlung von Zeichen, die auf der Anzeige angezeigt wird;
Bewirken der Anzeige eines Menüs auf der Anzeige, wobei das Menü ein Menüelement umfasst, wobei das Menüelement die erste Folge von Zeichen und die zweite Folge von Zeichen umfasst; und
Bereitstellen der ersten Folge von Zeichen und der zweiten Folge von Zeichen für eine Telefonanrufanwendung der Kommunikationsvorrichtung als Reaktion auf die Bestimmung, dass der Benutzer das Menüelement ausgewählt hat.

14. Vorrichtung nach Anspruch 13, **dadurch gekennzeichnet, dass** die erste Folge von Zeichen und die zweite Folge von Zeichen durch ein spezifisches Zeichen getrennt sind, das der Telefonanwendung anzeigt, die zweite Folge von Zeichen eine zeitlich festgelegte Wartezeit nach der Übertragung der ersten Folge von Zeichen zu übertragen.

15. Vorrichtung nach Anspruch 13, **dadurch gekennzeichnet, dass** die zweite Folge von Zeichen eine zeitlich festgelegte Wartezeit nach der Bereitstellung der ersten Folge von Zeichen geprüft wird.

16. Vorrichtung nach einem der Ansprüche 13 bis 15, wobei der Prozessor weiter angepasst ist, als Reaktion auf die Erkennung der ersten Folge von Zeichen die Anzeige zur Herausstellung der ersten Folge von Zeichen zu ändern.

17. Vorrichtung nach Anspruch 13 bis 15, wobei der Prozessor weiter angepasst ist, als Reaktion auf die Erkennung der zweiten Folge von Zeichen die Anzeige zur Herausstellung der zweiten Folge von Zeichen zu ändern.

18. Vorrichtung nach Anspruch 17, **dadurch gekennzeichnet, dass** die Änderung Unterstreichen der zweiten Folge von Zeichen umfasst.

19. Vorrichtung nach Anspruch 17 oder Anspruch 18, wobei der Prozessor weiter angepasst ist zum:
Feststellen, dass ein Benutzer Aufmerksamkeit auf die zweite Folge von Zeichen gerichtet hat; und
weiteren Ändern der Anzeige, um die zweite Folge von Zeichen weiter herauszustellen.

20. Vorrichtung nach Anspruch 19, **dadurch gekennzeichnet, dass** die weitere Änderung Gestalten der zweiten Folge von Zeichen in fetter Schrift umfasst.

21. Vorrichtung nach einem der Ansprüche 13 bis 20, **dadurch gekennzeichnet, dass** die Telefonnummer eine erste Telefonnummer ist und der Prozessor weiter angepasst ist zum Erkennen einer zweiten Folge von Zeichen, die auf der Anzeige als eine zweite Telefonnummer anzuzeigen ist.

22. Vorrichtung nach einem der Ansprüche 13 bis 21, **dadurch gekennzeichnet, dass** die Telefonnummer mit einer Konferenzbrücke assoziiert ist und die zusätzliche Information ein Passcode ist, der mit einer bestimmten Konferenzverbindung assoziiert ist.

23. Vorrichtung nach einem der Ansprüche 13 bis 22, **dadurch gekennzeichnet, dass** zum Erkennen der zweiten Folge von Zeichen als die zusätzliche Information der Prozessor angepasst ist zur Berücksichtigung einer festen Zahl von Zeichen, die der ersten Folge von Zeichen vorangehen und nachfolgen.

## Revendications

1. Procédé pour entreprendre un appel téléphonique sur un dispositif de communication, ledit procédé **se caractérisant par** les étapes suivantes :
reconnaître un numéro de téléphone dans une première chaîne de caractères par l'analyse d'un jeu de caractères dans une application exécutée sur le dispositif et affichée sur un affichage dudit dispositif de communication ;
reconnaître des informations supplémentaires apparentées audit numéro de téléphone dans une deuxième chaîne de caractères par l'analyse dudit jeu de caractères affichés sur ledit affichage ;
faire afficher un menu sur ledit affichage, ledit menu comprenant un élément de menu, ledit élément de menu comprenant ladite première chaîne de caractères et ladite seconde chaîne de caractères ; et
en réaction à la détermination que ledit utilisateur a sélectionné ledit élément de menu, fournir ladite première chaîne de caractères et ladite seconde chaîne de caractères à une application d'appel téléphonique dudit dispositif de communication.

2. Procédé tel que revendiqué à la revendication 1, se caractérisant en cela que ladite action de fournir met en jeu la séparation de la première chaîne de caractères et de la seconde chaîne de caractères par un caractère spécifique indiquant à ladite application téléphonique de transmettre ladite seconde chaîne de caractères avec un retard programmé après la transmission de ladite première chaîne de caractères.

3. Procédé tel que revendiqué à la revendication 1, se caractérisant en cela que ladite action de fournir met en jeu l'action de fournir ladite seconde chaîne de caractères avec un retard programmé après l'action de fournir ladite première chaîne de caractères.

4. Procédé tel que revendiqué dans l'une quelconque des revendications 1 à 3, se caractérisant en cela que ledit procédé met aussi en jeu, en réaction à ladite reconnaissance de ladite première chaîne de caractères, une modification dudit affichage pour mettre en exergue ladite première chaîne de caractères.

5. Procédé tel que revendiqué dans l'une quelconque des revendications 1 à 3, se caractérisant en cela que ledit procédé met aussi en jeu, en réaction à ladite reconnaissance de ladite seconde chaîne de caractères, une modification dudit affichage pour mettre en exergue ladite seconde chaîne de caractères.

6. Procédé tel que revendiqué à la revendication 5, se caractérisant en cela que ladite modification comporte le soulignement de ladite seconde chaîne de caractères.

7. Procédé tel que revendiqué à la revendication 5 ou 6, se caractérisant en cela que ledit procédé comporte les étapes complémentaires suivantes :
déterminer qu'un utilisateur a porté son attention sur la seconde chaîne de caractères ; et
effectuer une modification complémentaire dudit affichage pour renforcer la mise en exergue de ladite seconde chaîne de caractères.

8. Procédé tel que revendiqué à la revendication 7, se caractérisant en cela que ladite modification complémentaire comporte un rendu en gras de ladite seconde chaîne de caractères.

9. Procédé tel que revendiqué dans l'une quelconque des revendications 1 à 8, se caractérisant en cela que ledit numéro de téléphone est un premier numéro de téléphone, et que ledit procédé comporte en outre la reconnaissance d'une seconde chaîne de caractères à afficher sur ledit affichage en tant que second numéro de téléphone.

10. Procédé tel que revendiqué dans l'une quelconque des revendications 1 à 8, se caractérisant en cela que ledit numéro de téléphone est associé à un pont de conférence et que lesdites informations supplémentaires sont un mot de passe associé à un appel en conférence donné.

11. Procédé tel que revendiqué dans l'une quelconque des revendications 1 à 10, se caractérisant en cela que ladite opération de reconnaissance desdites informations complémentaires dans ladite seconde chaîne de caractères met en jeu la considération d'un nombre fixe de caractères précédant et succédant ladite première chaîne de caractères.

12. Support lisible par ordinateur contenant des instructions exécutables par ordinateur se caractérisant en cela que lesdites instructions, lorsqu'elles sont effectuées par un processeur sur un dispositif de communication, font appliquer un procédé conforme à l'une quelconque des revendications 1 à 11 par ledit processeur.

13. Dispositif de communication se caractérisant en cela qu'il comporte :
un affichage (702) ;
un processeur (704) adapté pour exécuter une première application afin de :
reconnaître un numéro de téléphone dans une première chaîne de caractères par l'analyse d'un jeu de caractères dans une application exécutée par le dispositif et à afficher sur ledit affichage ;
reconnaître des informations supplémentaires apparentées audit numéro de téléphone dans une seconde chaîne de caractères par l'analyse dudit jeu de caractères affiché sur ledit affichage ;
faire afficher un menu sur ledit affichage, ledit menu comprenant un élément de menu, ledit élément de menu comprenant ladite première chaîne de caractères et ladite seconde chaîne de caractères ; et
fournir ladite première chaîne de caractères et ladite seconde chaîne de caractères à une application d'appel téléphonique dudit dispositif de communication en réaction à la détermination que ledit utilisateur a sélectionné ledit élément de menu.

14. Dispositif tel que revendiqué à la revendication 13, se caractérisant en cela que ladite première chaîne de caractères et ladite seconde chaîne de caractères sont séparées par un caractère spécifique indiquant à ladite application téléphonique de transmettre ladite seconde chaîne de caractères avec un retard programmé après la transmission de ladite première chaîne de caractères.

15. Dispositif tel que revendiqué à la revendication 13, se caractérisant en cela que ladite seconde chaîne de caractères est fournie au bout d'un retard programmé une fois que la première chaîne de caractères a été fournie.

16. Dispositif tel que revendiqué dans l'une quelconque des revendications 13 à 15, le processeur étant en outre adapté, en réaction à ladite reconnaissance de ladite première chaîne de caractères, pour modifier ledit affichage afin de mettre en exergue ladite première chaîne de caractères.

17. Dispositif tel que revendiqué dans les revendications 13 à 15, le processeur étant en outre adapté, en réaction à ladite reconnaissance de ladite seconde chaîne de caractères, pour modifier ledit affichage afin de mettre en exergue ladite seconde chaîne de caractères.

18. Dispositif tel que revendiqué à la revendication 17, se caractérisant en cela que ladite modification met en jeu le soulignement de ladite seconde chaîne de caractères.

19. Dispositif tel que revendiqué dans les revendications 17 ou 18, le processeur étant en outre adapté pour :
déterminer qu'un utilisateur a porté son attention sur la seconde chaîne de caractères ; et
effectuer une modification complémentaire dudit affichage pour renforcer la mise en exergue de ladite seconde chaîne de caractères.

20. Dispositif tel que revendiqué à la revendication 19, se caractérisant en cela que ladite modification complémentaire comporte un rendu en gras de ladite seconde chaîne de caractères.

21. Dispositif tel que revendiqué dans l'une quelconque des revendications 13 à 20, se caractérisant en cela que ledit numéro de téléphone est un premier numéro de téléphone, que et ledit processeur est en outre adapté pour reconnaître une seconde chaîne de caractères à afficher sur ledit affichage en tant que second numéro de téléphone.

22. Dispositif tel que revendiqué dans l'une quelconque des revendications 13 à 21, se caractérisant en cela que ledit numéro de téléphone est associé à un pont de conférence et que lesdites informations supplémentaires sont un mot de passe associé à un appel en conférence donné.

23. Dispositif tel que revendiqué dans l'une quelconque des revendications 13 à 22, se caractérisant en cela que pour reconnaître lesdites informations complémentaires dans ladite seconde chaîne de caractères, ledit processeur est adapté pour considérer un nombre fixe de caractères précédant et succédant ladite première chaîne de caractères.
